# EUROPEAN PATENT APPLICATION

(11) **EP 2 712 225 A1**
(43) Date of publication of application: **26.03.2014**
(21) Application number: 12786495.7
(22) Date of filing: 10.05.2012
(51) Int. Cl.: H04W 24/04, H04W 76/04, H04W 92/18

(54) **MOBILE COMMUNICATION METHOD, MOBILE STATION, CORE NETWORK DEVICE, AND WIRELESS BASE STATION**

(30) Priority: 17.05.2011 JP 2011110786
(71) Applicant: NTT DOCOMO, INC., Chiyoda-ku Tokyo 100-6150 (JP)
(72) Inventor: IWAMURA, Mikio, Tokyo 100-6150 (JP); TAKAHASHI, Hideaki, Tokyo 100-6150 (JP)
(74) Representative: HOFFMANN EITLE
(86) International application number: PCT/JP2012/061956
(87) International publication number: WO 2012/157505

(57) **Abstract**

To provide remedies when the quality of a radio link in a Ud interface is deteriorated. In a mobile communication method according to the present invention, a first communication state in which transmission/reception of a data signal is performed between a mobile station UE#1 and a mobile station UE#2 through a radio link in a Ud interface set between the mobile station UE#1 and the mobile station UE#2 without through a radio link in a Uu interface set between a mobile station and a radio base station eNB, and a second communication state in which transmission/reception of a data signal is performed between the mobile station UE#1 and the mobile station UE#2 through the radio link in the Uu interface can be switched. When the mobile station UE#1 detects RLF in the Ud interface in the first communication state, the mobile station UE#1 transits to the second communication state.

## Description

### Technical Field

The present invention relates to a mobile communication method, a mobile station, a core network device, and a radio base station.

### Background Art

In a long term evolution (LTE) system, a mobile station UE is configured to receive a signal such as a reference signal (RS) from a radio base station eNB in a radio link in a Uu interface, and to monitor the quality of the signal (signal to interference ratio, SIR).

To be specific, the mobile station UE is configured to detect radio link failure (RLF) as described below using parameters N310, N311, and T310 set with a radio resource control (RRC) message by the radio base station eNB.

In the mobile station UE, a physical layer measures the quality (SIR) of a received signal (RS), and notifies an RRC layer of "out-of-sync" when the quality is "Qₒᵤₜ" or less, and notifies the RRC layer of "in-of-sync" when the quality is "Qᵢₙ" or more.

Here, when the quality falls between "Qᵢₙ" and "Qₒᵤₜ", the physical layer of the mobile station UE does not notify the RRC layer of anything. Note that such measurement is performed with a period of 40 ms.

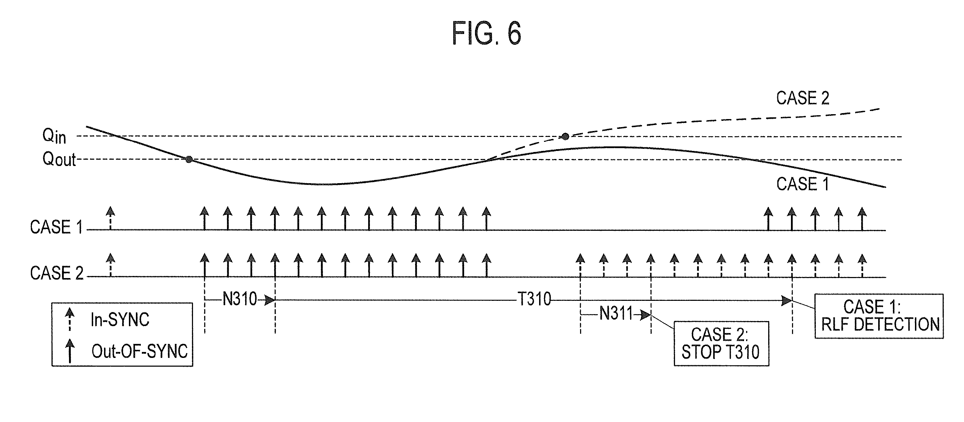

Then, as illustrated in FIG. 6, in the mobile station UE, when the RRC layer successively receives "out-of-sync" N310 times from the physical layer, the RRC layer starts T310.

Following that, upon successively receiving "in-of -sync" N311 times while T310 is running, the RRC layer stops T310 and resets the process (CASE 2).

Meanwhile, when T310 expires, the RRC layer detects RLF (CASE 1) .

Upon receiving RLF, the mobile station UE performs cell selection processing, and performs re-connection processing (RRC Connection Re-establishment) if the mobile station UE finds a "suitable cell".

Citation List

### Non-Patent Literatures

Non-Patent Literature 1: 3GPP TS36.331
Non-Patent Literature 2: 3GPP TS36.133

### Summary of Invention

However, in a conventional LTE mobile communication system, it is configured such that both of a data signal and a control signal are transmitted/received through the radio base station eNB even if a plurality of mobile stations UE is arranged in the same cell (or in a cell under control of the radio base station eNB), and thus there is a problem that a processing load of the radio base station eNB may be increased.

To solve the problem, the transmission/reception of a data signal through a radio link in an interface between mobile stations (hereinafter, a Ud interface) without through radio links in Uu interfaces set between the plurality of mobile stations UE and the radio base station eNB can be assumed.

However, in the mechanism of the conventional LTE mobile communication system, when the plurality of mobile stations UE transmits/receives a data signal through the radio link in the Ud interface, there is a problem that there are no remedies when the quality of the radio link in the Ud interface is deteriorated.

The present invention has been made in view of the above-described problems and an objective is to provide a mobile communication method, a mobile station, a core network device, and a radio base station capable of providing remedies when the quality of the radio link in the Ud interface is deteriorated.

A first characteristic of the present invention is a mobile communication method capable of switching a first communication state in which transmission/reception of a data signal is performed between a first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, and the method includes the step of: the first mobile station transiting to the second communication state when the first mobile station detects radio link failure in the interface between mobile stations in the first communication state.

A second characteristic of the present invention is a mobile station operable as a first mobile station in a mobile communication system capable of switching a first communication state in which transmission/reception of a data signal is performed between the first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, and the mobile station includes: a communication unit configured to transit to the second communication state when radio link failure is detected in the interface between mobile stations in the first communication state.

A third characteristic of the present invention is a core network device used in a mobile communication system capable of switching a first communication state in which transmission/reception of a data signal is performed between a first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, and the core network device includes: an instruction unit configured to instruct transition from the first communication state to the second communication state to the first mobile station and the second mobile station through the radio base station when a report of a fact that radio link failure is detected in the interface between mobile stations is received from the first mobile station in the first communication state through the radio base station.

A fourth characteristic of the present invention is a radio base station used in a mobile communication system capable of switching a first communication state in which transmission/reception of a data signal is performed between a first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, and the radio base station includes: an instruction unit configured to instruct transition from the first communication state to the second communication state to the first mobile station and the second mobile station when a report of a fact that radio link failure is detected in the interface between mobile stations is received from the first mobile station in the first communication state.

### Brief Description of Drawings

FIG. 1 is an overall configuration diagram of a mobile communication system according to a first embodiment of the present invention.
FIG. 2 is a function block diagram of a mobile station according to the first embodiment of the present invention.
FIG. 3 is a function block diagram of a radio base station according to the first embodiment of the present invention.
FIG. 4 is a function block diagram of a core network device according to the first embodiment of the present invention.
FIG. 5 is a sequence diagram illustrating an operation of the mobile communication system according to the first

### embodiment of the present invention.

FIG. 6 is a diagram for describing an operation of a conventional mobile communication system.

### Description of Embodiments

### (A mobile communication system according to a first embodiment of the present invention)

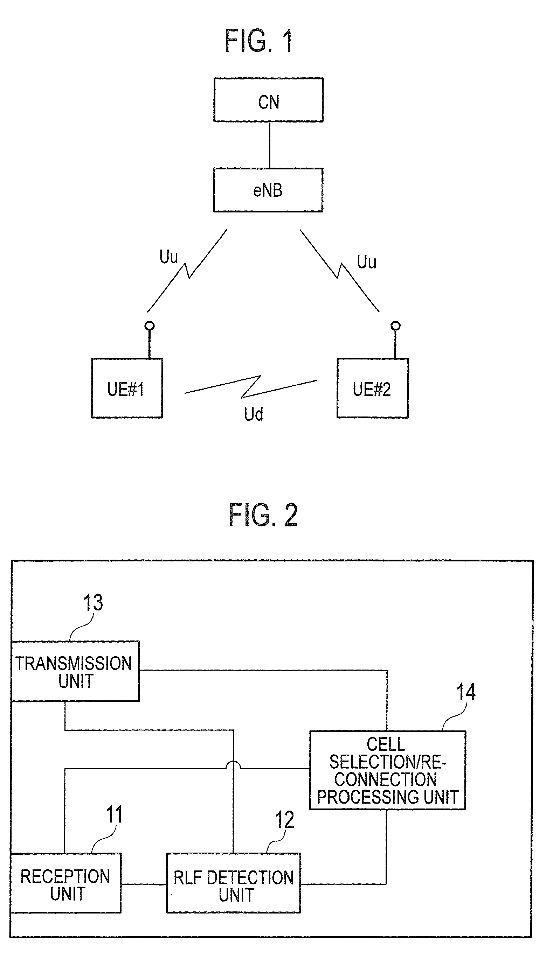

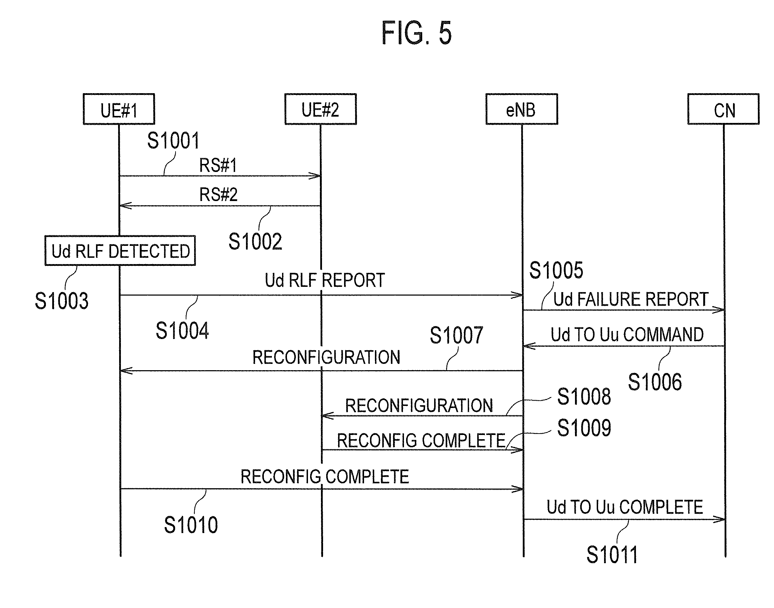

A mobile communication system according to a first embodiment of the present invention will be described with reference to FIGS. 1 and 5.

A mobile communication system according to the present embodiment is an LTE mobile communication system, and is, as illustrated in FIG. 1, includes a core network device CN and a radio base station eNB connected under control of the core network device CN. Note that the present invention is applicable to a cellular mobile communication system other than the LTE system.

Here, it is configured such that, in a first communication state, a data signal is transmitted/received between a mobile station UE#1 and a mobile station UE#2 through a radio link in a Ud interface set between the mobile station UE#1 and the mobile station UE#2 without through a radio link in Uu interfaces set between the radio base station eNB and the mobile stations.

Note that, as for a control signal, the mobile station UE#1 and the mobile station UE#2 are configured to perform transmission/reception of the control signal with the radio base station eNB through the radio link in the Uu interface in the first communication state.

Further, it is configured such that, in a second communication state, the data signal is transmitted/received between the mobile station UE#1 and the mobile station UE#2 through the radio link in the Uu interface.

That is, the mobile station UE#1 can transmit/receive the data signal to/from the mobile station UE#2 through the radio base station eNB (through the radio link in the Uu interface) (second communication state), and can transmit/receive the data signal to/from the mobile station UE#2 without through the radio base station eNB (through the radio link in the Ud interface) (first communication state).

Similarly, the mobile station UE#2 can transmit/receive the data signal to/from the mobile station UE#1 through the radio base station eNB (through the radio link in the Uu interface) (second communication state), and can transmit/receive the data signal to/from the mobile station UE#1 without through the radio base station eNB (through the radio link in the Ud interface) (first communication state).

For example, in the mobile communication system according to the present embodiment, the core network device CN may be a mobility management entity (MME) or a gateway device P/S-GW (PDN/Serving Gateway).

Since the function of the mobile station UE#1 and the function of the mobile station UE#2 are basically the same, and therefore, hereinafter, the function of the mobile station UE#1 will be described as a representative example. As illustrated in FIG. 2, the mobile station UE#1 includes a reception unit 11, an RLF detection unit 12, a transmission unit 13, and a cell selection/re-connection processing unit 14.

The reception unit 11 is configured to receive a control signal from the radio base station eNB through the radio link in the Uu interface, and to receive a data signal from the mobile station UE#2 through the radio link in the Ud interface when the mobile stations UE are in the first communication state.

Further, the reception unit 11 is configured to receive the control signal and the data signal from the radio base station eNB through the radio link in the Uu interface when the mobile station UE is in the second communication state.

Further, the reception unit 11 is configured to receive an RS for channel estimation transmitted from the mobile station UE#2.

The RLF detection unit 14 is configured to detect RLF in the Ud interface in addition to RLF in the Uu interface.

For example, the RLF detection unit 14 may be configured to detect RLF in the Ud interface by a similar method for detecting RLF in the Uu interface.

Here, the RLF detection unit 14 maybe configured to detect RLF in the Ud interface using the same values of the parameters N310, N311, and T310 used for the detection of RLF in the Uu interface, or may be configured to detect RLF in the Ud interface using different values from the values of the parameters N310, N311, and T310 used for the detection of RLF in the Uu interface.

The transmission unit 13 is configured to transmit the control signal to the radio base station eNB through the radio link in the Uu interface, and to transmit the data signal to the mobile station UE#2 through the radio link in the Ud interface, when the mobile stations UE are in the first communication state.

Further, the transmission unit 13 is configured to transmit the control signal and the data signal to the radio base station eNB through the radio link in the Uu interface when the mobile stations UE are in the second communication state.

Further, the transmission unit 13 is configured to transmit an RS for channel estimation to the mobile station UE#2.

Note that the transmission unit 13 is configured, when the RLF detection unit 14 detects RLF in the Ud interface, to report the fact of the detection to the radio base station eNB, that is, to transmit "Ud RLF Report".

The cell selection/re-connection processing unit 14 is configured to perform cell selection processing and re-connection processing

Here, the transmission unit 13 and the reception unit 11 are configured to transit to the second communication state when the mobile station UE#1 is in the first communication state and when the RLF detection unit 14 detects RLF in the Ud interface.

For example, the transmission unit 13 and the reception unit 11 may be configured to transit from the first communication state to the second communication state when the reception unit 11 receives "Reconfiguration" described below from the radio base station eNB.

Further, the cell selection/re-connection processing unit 14 may be configured to release the radio link in the Ud interface, to perform the cell selection processing, and to establish the radio link in the Uu interface with a cell selected by the re-connection processing when the mobile station UE is in the first communication state and when the RLF detection unit 14 detects RLF in the Ud interface.

As a result, the transmission unit 13 and the reception unit 11 are configured to transit from the first communication state to the second communication state.

As illustrated in FIG. 2, the radio base station eNB includes a reception unit 21 and a transmission unit 22.

The reception unit 21 is configured to receive the control signal from the mobile station UE#1 or the mobile station UE#2 in the first communication state, and to receive the control signal and the data signal from the mobile station UE#1 or the mobile station UE#2 in the second communication state.

In addition, the reception unit 21 is configured to receive the above-described "Ud RLF Report" from the mobile station UE#1 or the mobile station UE#2 in the first communication state.

The transmission unit 22 is configured to transmit the control signal to the mobile station UE#1 or the mobile station UE#2 in the first communication state, and to transmit the control signal and the data signal to the mobile station UE#1 or the mobile station UE#2 in the second communication state.

Further, the transmission unit 22 is configured to transmit a "Ud Failure Report" that indicates the fact that RLF is detected in the Ud interface to the core network device CN when the reception unit 21 receives "Ud RLF Report" from the mobile station UE#1 or the mobile station UE#2 in the first communication state.

Further, the transmission unit 22 is configured to transmit "Reconfiguration" that instructs transition from the first communication state to the second communication state to the mobile station UE#1 or the mobile station UE#2 in the first communication state when the reception unit 21 receives, from the core network device CN, "Ud to Uu Command" that instructs transition of the mobile station UE#1 or the mobile station UE#2 from the first communication state to the second communication state.

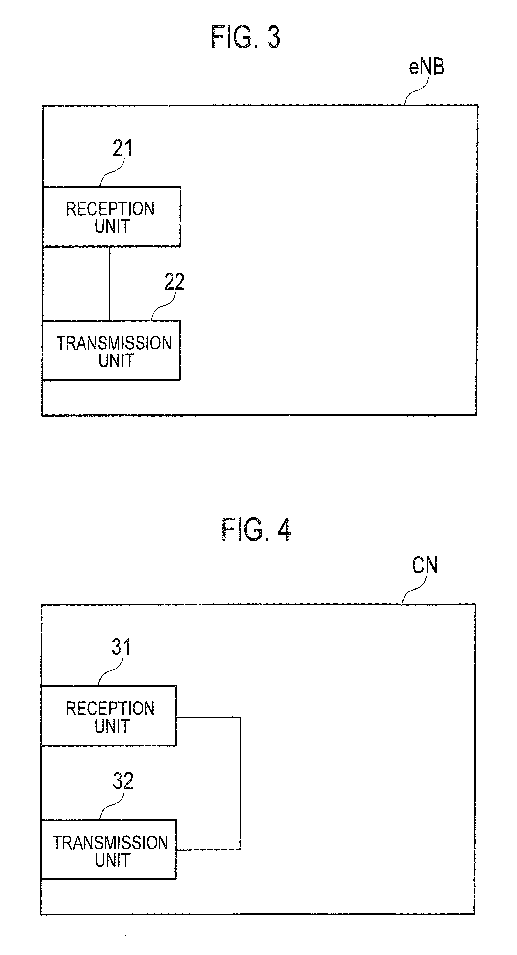

As illustrated in FIG. 3, the core network device CN includes a reception unit 31 and a transmission unit 32.

The reception unit 31 is configured to receive various signals from the radio base station eNB. The transmission unit 32 is configured to transmit various signals to the radio base station eNB.

For example, the transmission unit 32 is configured to transmit "Ud to Uu Command" to the radio base station eNB when the reception unit 31 receives "Ud Failure Report" from the radio base station eNB.

Hereinafter, an operation when the mobile station UE#1 and the mobile station UE#2 transit from the first communication state to the second communication state in the mobile communication system according to the present embodiment will be described with reference to FIG. 5.

As illustrated in FIG. 5, in step S1001, the mobile station UE#1 transmits an RS#1 to the mobile station UE#2 through the radio link in the Ud interface, and in step S1002, the mobile station UE#2 transmits an RS#2 to the mobile station UE#2 through the radio link in the Ud interface.

In step S1003, the mobile station UE#1 detects RLF in the Ud interface based on a measurement result of the quality of the received RS#2, and in step S1004, the mobile station UE#1 transmits "Ud RLF Report" to the radio base station eNB.

In step S1005, the radio base station eNB transmits "Ud Failure Report" to the core network device CN.

In step S1006, the core network device CN transmits "Ud to Uu Command" to the radio base station eNB.

In step S1007, the radio base station eNB transmits, to the mobile station UE#1, "Reconfiguration" that instructs transition from the first communication state to the second communication state, and in step S1008, the radio base station eNB transmits, to the mobile station UE#2, "Reconfiguration" that instructs transition from the first communication state to the second communication state.

In step S1009, the mobile station UE#2 transmits "Reconfig Complete" to the radio base station eNB, and in step S1010, the mobile station UE#1 transmits "Reconfig Complete" to the radio base station eNB.

In step S1011, the radio base station eNB transmits "Ud to Uu Complete" to the core network device CN.

According to the mobile communication system in the first embodiment of the present invention, when the quality of the radio link in the Ud interface is deteriorated, that is, when the mobile station UE#1 and the mobile station UE#2 in the first communication state detect RLF in the Ud interface, the mobile station UE#1 and the mobile station UE#2 transit from the first communication state to the second communication state, to thereby continue communication using the Uu interface in place of the Ud interface.

### (Modification Example 1)

In a mobile communication system according to a modification example 1, a radio base station eNB may be configured to transmit, to a mobile station UE#1 and a mobile station UE#2, "Reconfiguration" that instructs transition from a first communication state to a second communication state without transmitting "Ud Failure Report" to a core network device CN when the radio base station eNB receives "Ud RLF Report" from the mobile station UE#1 and the mobile station UE#2.

The above-described characteristics of the present embodiment may be expressed as follows.

A first characteristic of the present embodiment is a mobile communication method capable of switching a first communication state in which transmission/reception of a data signal is performed between a mobile station UE#1 (first mobile station) and a mobile station UE#2 (second mobile station) through a radio link in a Ud interface (interface between mobile stations) set between the mobile station UE#1 and the mobile station UE#2 without through a radio link in a Uu interface (radio base station interface) set between a mobile station and a radio base station eNB, and a second communication state in which transmission/reception of a data signal is performed between the mobile station UE#1 and the mobile station UE#2 through the radio link in the Uu interface, and the method includes the step of: the mobile station UE#1 transiting to the second communication state when the mobile station UE#1 detects RLF (radio link failure) in the Ud interface in the first communication state.

In the first characteristic of the present embodiment, the above-described step may include: when the mobile station UE#1 detects RLF in the Ud interface in the first communication state, reporting, by the mobile station UE#1 to the radio base station eNB, the fact of the detection; reporting, by the radio base station eNB to a core network device CN, the fact that RLF is detected in the Ud interface; and instructing, by the core network device CN to the mobile station UE#1 and the mobile station UE#2 through the radio base station eNB, transition from the first communication state to the second communication state.

In the first characteristic of the present embodiment, the above-described step may include: when the mobile station UE#1 detects RLF in the Ud interface in the first communication state, reporting, by the mobile station UE#1 to the radio base station eNB, the fact of the detection; and instructing, by the radio base station eNB to the mobile station UE#1 and the mobile station UE#2, transition from the first communication state to the second communication state.

In the first characteristic of the present embodiment, the above-described step may include: when the mobile station UE#1 detects RLF in the Ud interface in the first communication state, releasing, by the mobile station UE#1, the radio link in the Ud interface; performing, by the mobile station UE#1, cell selection processing; and establishing, by the mobile station UE#1, the radio link in the Uu interface.

A second characteristic of the present embodiment is a mobile station UE operable as a mobile station UE#1 in a mobile communication system capable of switching a first communication state in which transmission/reception of a data signal is performed between a mobile station UE#1 and a mobile station UE#2 through a radio link in a Ud interface set between the mobile station UE#1 and the mobile station UE#2 without through a radio link in a Uu interface set between a mobile station and a radio base station eNB, and a second communication state in which transmission/reception of a data signal is performed between the mobile station UE#1 and the mobile station UE#2 through the radio link in the Uu interface, and the mobile station UE includes: a transmission unit 13 and a reception unit 11 (communication unit) configured to transit to the second communication state when RLF is detected in the Ud interface in the first communication state.

In the second characteristic of the present embodiment, the transmission unit 13 is configured, when RLF is detected in the Ud interface in the first communication state, to report the fact of the detection to the radio base station eNB, and the transmission unit 13 may be configured to transit to the second communication state when information instructing transition from the first communication state to the second communication state is received from the core network device CN through the radio base station eNB.

In the second characteristic of the present embodiment, the transmission unit 13 is configured, when RLF is detected in the Ud interface in the first communication state, to report the fact of the detection to the radio base station eNB, and the transmission unit 13 may be configured to transit to the second communication state when information instructing transition from the first communication state to the second communication state is received from the radio base station eNB.

In the second characteristic of the present embodiment, the cell selection/re-connection processing unit 14 (communication unit) maybe configured to release the radio link in the Ud interface, to perform cell selection processing, and to establish the radio link in the Uu interface when RLF is detected in the Ud interface in the first communication state.

A third characteristic of the present embodiment is a core network device CN used in a mobile communication system capable of switching a first communication state in which transmission/reception of a data signal is performed between a mobile station UE#1 and a mobile station UE#2 through a radio link in a Ud interface set between the mobile station UE#1 and the mobile station UE#2 without through a radio link in a Uu interface set between a mobile station and a radio base station eNB, and a second communication state in which transmission/reception of a data signal is performed between the mobile station UE#1 and the mobile station UE#2 through the radio link in the Uu interface, and the core network device CN includes: a transmission unit 31 (instruction unit) configured to instruct transition from the first communication state to the second communication state to the mobile station UE#1 and the mobile station UE#2 through the radio base station eNB when a report of the fact that RLF is detected in the Ud interface is received from the mobile station UE#1 in the first communication state through the radio base station eNB.

A fourth characteristic of the present embodiment is a radio base station eNB used in a mobile communication system capable of switching a first communication state in which transmission/reception of a data signal is performed between a mobile station UE#1 and a mobile station UE#2 through a radio link in a Ud interface set between the mobile station UE#1 and the mobile station UE#2 without through a radio link in a Uu interface set between a mobile station and a radio base station eNB, and a second communication state in which transmission/reception of a data signal is performed between the mobile station UE#1 and the mobile station UE#2 through the radio link in the Uu interface, and the radio base station eNB includes: a transmission unit 21 (instruction unit) configured to instruct transition from the first communication state to the second communication state to the mobile station UE#1 and the mobile station UE#2 when a report of the fact that RLF is detected in the Ud interface is received from the mobile station UE in the first communication state.

Note that the above-described operations of the core network device CN, the radio base station eNB, the mobile station UE, and the like may be implemented by hardware, by a software module executed by a processor, or by combination of the hardware and the software module.

The software module may be provided in a storage medium in an arbitrary format such as a random access memory (RAM), a flash memory, a read only memory (ROM), an erasable programmable ROM (EPROM), an electrically erasable and programmable ROM (EEPROM), a register, a hard disk, a removable disk, and a CD-ROM.

The storage medium is connected to the processor so that the processor can read/write information in the storage medium. In addition, the storage medium may be integrated in the processor. In addition, the storage medium and the processor may be provided in the ASIC. The ASIC may be provided in the core network device CN, the radio base station eNB, the mobile station UE, and the like. In addition, the storage medium and the processor may be provided in the core network device CN, the radio base station eNB, the mobile station UE, and the like as a discrete component.

While the present invention has been described in details using the embodiments, it is apparent for a person skilled in the art that the present invention is not limited to the embodiments described in the present specification. The present invention can be implemented as a modification or an alternation without departing from the gist and scope of the present invention defined by the description of claims. Therefore, the description of the present specification intends illustration, and does not provide any restrictive meaning to the present invention.

Note that the entire contents of Japanese Patent Application No. 2011-110786 (filed on May 17, 2011) are incorporated in the specification of the present application by reference.

### Industrial Applicability

As described above, according to the present invention, a mobile communication method, a mobile station, a core network device, and a radio base station capable of providing remedies when the quality of the radio link in the Ud interface is deteriorated can be provided.

### Reference Signs List

- UE: Mobile station
- eNB: Radio base station
- CN: Core network device
- 11, 21, and 31: Reception unit
- 12: RLF detection unit
- 13, 22, and 32: Transmission unit
- 14: Cell selection/re-connection processing unit

## Claims

1. A mobile communication method capable of switching a first communication state in which transmission/reception of a data signal is performed between a first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, the method comprising the step of:
the first mobile station transiting to the second communication state when the first mobile station detects radio link failure in the interface between mobile stations in the first communication state.

2. The mobile communication method according to claim 1, wherein the step includes:
when the first mobile station detects radio link failure in the interface between mobile stations in the first communication state, reporting, by the first mobile station to the radio base station, a fact of the detection;
reporting, by the radio base station to a core network device, the fact that the radio link failure is detected in the interface between mobile stations; and
instructing, by the core network device to the first mobile station and the second mobile station through the radio base station, transition from the first communication state to the second communication state.

3. The mobile communication method according to claim 1, wherein the step includes:
when the first mobile station detects radio link failure in the interface between mobile stations in the first communication state, reporting, by the first mobile station to the radio base station, a fact of the detection; and
instructing, by the radio base station to the first mobile station and the second mobile station, transition from the first communication state to the second communication state.

4. The mobile communication method according to claim 1, wherein the step includes:
by the first mobile station, releasing the radio link in the interface between mobile stations, performing cell selection processing, and establishing the radio link in the radio base station interface, when the first mobile station detects radio link failure in the interface between mobile stations in the first communication state.

5. A mobile station operable as a first mobile station in a mobile communication system capable of switching a first communication state in which transmission/reception of a data signal is performed between the first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, the mobile station comprising:
a communication unit configured to transit to the second communication state when radio link failure is detected in the interface between mobile stations in the first communication state.

6. The mobile station according to claim 5, wherein, when radio link failure is detected in the interface between mobile stations in the first communication state, the communication unit is configured to report a fact of the detection to the radio base station, and
the communication unit is configured to transit to the second communication state when information instructing transition from the first communication state to the second communication state is received from the core network device through the radio base station.

7. The mobile station according to claim 5, wherein, when radio link failure is detected in the interface between mobile stations in the first communication state, the communication unit is configured to report a fact of the detection to the radio base station, and
the communication unit is configured to transit to the second communication state when information instructing transition from the first communication state to the second communication state is received from the radio base station.

8. The mobile station according to claim 5, wherein the communication unit is configured to release the radio link in the interface between mobile stations, to perform cell selection processing, and to establish the radio link in the radio base station interface when radio link failure is detected in the interface between the mobile stations in the first communication state.

9. A core network device used in a mobile communication system capable of switching a first communication state in which transmission/reception of a data signal is performed between a first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, the core network device comprising:
an instruction unit configured to instruct transition from the first communication state to the second communication state to the first mobile station and the second mobile station through the radio base station when a report of a fact that radio link failure is detected in the interface between mobile stations is received from the first mobile station in the first communication state through the radio base station.

10. A radio base station used in a mobile communication system capable of switching a first communication state in which transmission/reception of a data signal is performed between a first mobile station and a second mobile station through a radio link in an interface between mobile stations set between the first mobile station and the second mobile station without through a radio link in a radio base station interface set between a mobile station and a radio base station, and a second communication state in which transmission/reception of a data signal is performed between the first mobile station and the second mobile station through the radio link in the radio base station interface, the radio base station comprising:
an instruction unit configured to instruct transition from the first communication state to the second communication state to the first mobile station and the second mobile station when a report of a fact that radio link failure is detected in the interface between mobile stations is received from the first mobile station in the first communication state.
